# EUROPEAN PATENT SPECIFICATION

(11) **EP 2 788 865 B1**
(45) Date of publication and mention of the grant of the patent: **07.06.2017**
(21) Application number: 11876974.4
(22) Date of filing: 06.12.2011
(51) Int. Cl.: G06F 11/34, G06F 11/36

(54) **METHOD, DEVICE AND COMPUTER PROGRAM PRODUCT FOR MEASURING USER PERCEPTION QUALITY OF A PROCESSING SYSTEM COMPRISING A USER INTERFACE**
VERFAHREN, VORRICHTUNG UND COMPUTERPROGRAMM ZUR MESSUNG DER BENUTZERWAHRNEHMUNGSQUALITÄT EINES VERARBEITUNGSSYSTEMS MIT EINER BENUTZERSCHNITTSTELLE
PROCÉDÉ, DISPOSITIF ET PRODUIT PROGRAMME D'ORDINATEUR POUR LA MESURE DE LA QUALITÉ DE PERCEPTION UTILISATEUR D'UN SYSTÈME DE TRAITEMENT COMPRENANT UNE INTERFACE UTILISATEUR

(43) Date of publication of application: 15.10.2014
(73) Proprietor: NXP USA, Inc., Austin TX 78735 (US)
(72) Inventor: TEPUS, Cristian, R-040364 Bucharest (RO)
(74) Representative: Freescale law department - EMEA patent ops
(86) International application number: PCT/IB2011/055488
(87) International publication number: WO 2013/084027

(56) References cited:
- JP-A- 2010 072 731
- US-A1- 2002 091 817
- US-B2- 6 856 943

## Description

### Field of the invention

This invention relates to a device, a method and a computer program product for measuring user perception quality of a processing system comprising a user interface.

### Background of the invention

A program, e.g. a computer program, is based on a sequence of instructions wherein an operation or a sequence of operations according to the instructions are performed using at least one processing device, such as a processor, a microcontroller unit (MCU) etc., and peripheral devices, e.g. a memory unit, in order to carry out a specified task with a processing system, such as, for example, a computer system, containing the processing device.

A program may, for example, be an application program, a system program, or any software tool, for example, an integrated development environment (IDE) that provides software development facilities, such as debugging and code analysis, to computer programmers. An IDE may especially contain a debugger. It may, for example, additionally consist of a source code editor, a compiler and/or an interpreter and build automation tools.

A program may, for example, be executed in a user mode, wherein one or more user interfaces, e.g. graphical user interfaces, are provided to a human user for presenting information to the user and allowing for interaction between the user and the program, for example, by requesting command input from the user. Processing systems with programs providing user interfaces may often be designed based on an assumption that the user is primarily interested in being able to influence in any possible way program execution by means of interacting with the program. However, user perception of a processing system executing a program may depend on the actual interest of the user. A user may, for example, also be interested in information retrieval, fast execution or repetition, or visually fluent display and non-blocking execution.

Execution of certain tasks may include performing a sequence of operations, some of which may be mandatory or core operations, whereas others may be regarded as adjacent or auxiliary operations. Just to give an example, for an IDE, such as an IDE for complex embedded systems, a debugging task or debugger operation, for example corresponding to a "step over" command may be performed as a sequence of operations including mandatory operations, i.e., step core operations, and adjacent or auxiliary operations, such as, for example, reading a stack pointer register for building a stack.

A user perception metric (UPM), i.e., a number indicating user perception quality of a corresponding operation or sequence of operations, may be used for evaluation of the one or more operations and optimization of task execution with respect to suitability of the chosen way of performing the one or more operations on the processing system as perceived by a human user.

United States patent number 6,856,943 B2 (Murphy et al.) describes a method for measuring latency of a computer system and for inferring from the latency a user perception of performance. The user perception can enable a system administrator to make adjustments to the computer system, such as increasing hardware or decreasing the number of users on a particular server computer. The user perception as determined by Murphy et al. does, however, not indicate whether certain operations carried out by the computer system can be optimized.

### Summary of the invention

The present invention provides a device, a method and a computer program product for measuring user perception quality of a processing system comprising a user interface as described in the accompanying claims.

Specific embodiments of the invention are set forth in the dependent claims.

These and other aspects of the invention will be apparent from and elucidated with reference to the embodiments described hereinafter.

### Brief description of the drawings

Further details, aspects and embodiments of the invention will be described, by way of example only, with reference to the drawings. In the drawings, like reference numbers are used to identify like or functionally similar elements. Elements in the figures are illustrated for simplicity and clarity and have not necessarily been drawn to scale.
FIG. 1 schematically shows an example of a first embodiment of a method for measuring user perception quality of a processing system comprising a user interface.
FIG. 2 schematically shows an example of a second embodiment of a method for measuring user perception quality of a processing system comprising a user interface.
FIG. 3 schematically shows a diagram of an example of a sequence of operations over time.
FIG. 4 schematically shows an example of an embodiment of a device for measuring user perception quality of a processing system comprising a user interface.
FIG. 5 schematically shows an example of an embodiment of a computer program product.

### Detailed description of the preferred embodiments

Because the illustrated embodiments of the present invention may for the most part, be implemented using electronic components and circuits known to those skilled in the art, details will not be explained in any greater extent than that considered necessary, as illustrated, for the understanding and appreciation of the underlying concepts of the present invention and in order not to obfuscate or distract from the teachings of the present invention.

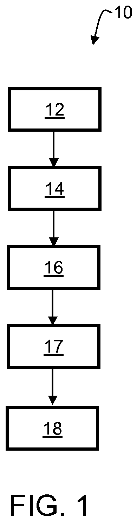

Referring to FIG. 1, an example of a first embodiment of a method 10 for measuring user perception quality of a processing system comprising a user interface is schematically shown. The method 10 comprises measuring 12 a first processing time for processing, by the processing system, one or more times one or more operations in a batch mode; measuring 14 a second processing time for processing, by the processing system, the one or more times the one or more operations and a predefined safety period in a user mode; and determining 16 a user perception metric (UPM) as a difference of a first value and a second value, the first value being determined depending on a ratio of the second processing time and the first processing time, the second value being determined depending on a ratio of the predefined safety period and the first processing time.

The method may comprise measuring an operation in two modes: In batch mode, the same operation or sequence of operations may be repeatedly sent to execution. The batch mode may, for example, be a script mode with continuous command sending in a loop or fast user interface (UI) message sending. In user mode, enough time may be left after the one or more operations, also sent in a loop, wherein "enough time" may comprise that a current operation is able to finish any view update or refresh it is intended to do.

A processing system may be any system arranged to process operations in order to perform tasks. A processing system may comprise software and/or hardware, such as a processing device and peripherals. A processing device may, for example, be a microprocessor, a microcontroller unit (MCU), a general purpose processor (GPP), a multimedia- or graphics processing unit (GPU), a central processing unit (CPU) or any other device suitable for processing operations. A peripheral may, for example, be a memory or storage device, an input device, an output device, a display device or graphical output device. A processing system may be arranged to perform operations or sequences of operations to carry out certain tasks when executing a program. A user interface may, for example, refer to a graphical user interface, e.g., displayed on a display or graphical output device of the processing system. A user interface may comprise one or more views, i.e., one or more units, e.g., "windows", arranged to separately display information related to the processing system or program. In an embodiment the processing system may, for example, comprise a debugger, e.g., of an IDE of an embedded system, and the method may comprise measuring graphical user interface (GUI) performance as user perception quality of debug operations.

User perception quality of a processing system may refer to a quality metric or user perception metric (UPM), i.e., a value indicating the quality of the processing system as perceived by a human user. This value may give an indication of potential modifications or improvements. The perceived quality may depend on a speed of processing operations, but may also be influenced, for example, by a fluency of displaying information via a user interface or unwanted blocking within execution of a sequence of operations.

The processing system may be arranged to perform operations or sequences of operations in a user mode and a batch mode. A user mode may be a mode, wherein one or more user interfaces are provided to a human user. Information may be presented to the user and interactive control may be applied to the program. This may comprise, for example, presenting several views to the user, which may or may not be relevant in a particular situation and may, for example, require command input from the human user. A batch mode may be a mode wherein an operation or sequence of operations may be performed without intervention by the user.

A first processing time for processing one or more times one or more operations in a batch mode may be a period of time or duration during which the processing system is in batch mode and one or more operations, i.e. one operation or a sequence of operations, are performed once or several times. The amount of repetitions of consecutively repeating processing the one or more operations may, for example, be selected by the user or may depend on the particular operations being performed. A second processing time for processing the one or more times the one or more operations and a predefined safety period in a user mode may be a period of time or duration during which the processing system is in user mode and the same one or more operations as previously performed in batch mode are performed the same amount of times in user mode, wherein each execution of the one or more operations is succeeded by a safety period or wait period of time. The safety period may be predefined or selected depending on the actual operations being performed, such as to assure that the operations are finished, for example, including view update or refresh.

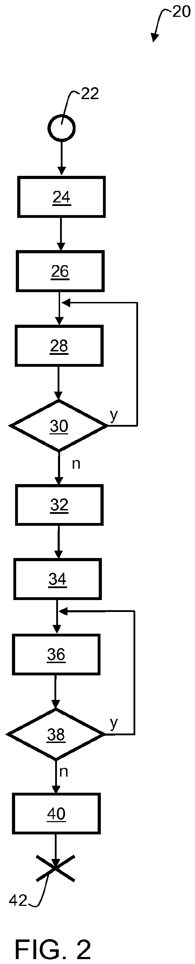

Referring to FIG. 2, an example of a second embodiment of a method for measuring user perception quality of a processing system comprising a user interface is schematically shown. The method 20 may comprise a begin stage 22 and a first initialization stage 24 wherein the processing system may be initialized and switched into batch mode. Stage 24 may be followed by stage 26, wherein a measurement of the first processing time may be started. Afterwards, the one or more operations may be performed 28 by the processing system. Stage 28 may be repeated one or more times, depending on whether 30 a current number of repetitions of operation processing is below a predefined number N of intended repetitions. If the answer is "yes" or "y", the one or more operations may be repeated. Otherwise, i.e. if the answer is "no" or "n", the measurement of the first processing time may be ended 32 and the processing system may be initialized a second time by switching into user mode and reading the predefined safety time, e.g., from a memory device. In stage 34, a measurement of the second processing time may be started. Afterwards, the one or more operations may be performed 36 by the processing system, followed by the safety period. Stage 36 may be repeated one or more times, depending on whether 38 a current number of repetitions of operation processing is below the predefined number N of intended repetitions. If the answer is "yes" or "y", the one or more operations may be repeated. Otherwise, i.e. if the answer is "no" or "n", the measurement of the second processing time may be ended 40 and a UPM may be calculated depending on the measured first and second processing times and the safety period and may be provided, e.g. to an evaluation unit, for further evaluation of the determined UPM. Stage 40 may be followed by an end stage 42.

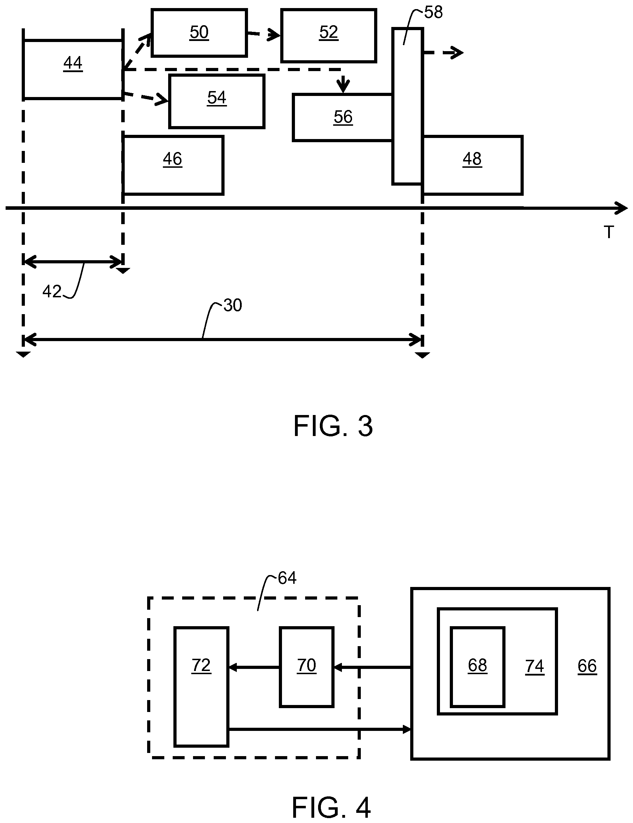

Referring to FIG. 3, a diagram of an example of a sequence of operations over time T is schematically shown. As an example, the shown operations may refer to operations for carrying out a "step over" sequence of operations executed by a debugger application of an IDE for an embedded system.

In user mode, the sequence of operations may require mandatory or step core operations 44, 48 and additional or auxiliary operations 50, 52, 54, 56, 58 . Auxiliary operations in a "step over" sequence of operations in a debugger may, for example, comprise reading stack pointers 50, showing stack view 52, showing variables view 54 and showing memory view 56. As shown, polling other events 58 and blockingly waiting for response may also require time. An overall maximum time Tmax 60 may allow to process the mandatory 44 and auxiliary operations 50, 52, 54, 56, 58 of a current step over sequence, including, for example, all operations related to UI views. A time Treal below Tmax may, for example result in blocking completion of the current step over sequence until the polling other events 58 and blockingly waiting for response may be finished.

In batch mode, the shown step over sequence of operations may be reduced to the minimal mandatory operations 44. Ideally, in batch mode, the step over may take Tmin 62 before processing a new operation 46.

A real time Treal for executing, for example, the step over sequence of operations may be above Tmin, i.e. longer than Tmin, but below Tmax. While the full step over sequence of operations for the example debugger may take Tmax, the user, quick stepping or batching commands in a script, may encounter Treal before completion of the step over sequence of operations. A user perception with respect to speed may be improved because Treal may be reduced, wherein Tmin may be the minimum Treal that may be achieved.

The first measured processing time or batch mode processing time Tbatch may be the time spent during executing N similar or identical sequences of operations in batch mode, wherein N=1, 2, 3,...

The second measured processing time or user mode processing time Tuser may be the time spent during executing N similar or identical sequences of operations, wherein for each of the sequences a safety period or wait time (Tw) may be considered in order to give to the step over sequence of operation time to finish. The safety period may, for example, be a maximum possible duration for processing, by the processing system, the one or more operations once. For the presented step over example, the one or more operations may refer to the step over sequence of operations.

The safety period or wait time Tw may comprise an event polling time Tpoll. Polling another operation or event and blocking completion of the current operation until an answer is received, i.e. polling other events 58, may take a period of time Tpoll. Polling may, for example, be asynchronous and may be performed during Tw to avoid blocking of completion of the sequence of operations.
The user perception metric (UPM) may be determined as a ratio between a measured time for performing the one or more operations in user mode and the measured time for performing the one or more operations in batch mode. Or the UPM may be determined as a difference of a first value and a second value, the first value being determined depending on a ratio of the second processing time Tuser and the first processing time Tbatch, the second value being determined depending on a ratio of the predefined safety period Tw and the first processing time Tbatch. The dependencies may, for example, be linear dependencies. The first value may, for example, be determined as the ratio of the second processing time and the first processing time. The second value may, for example, be determined as the one or more times of the ratio of the predefined safety period and the first processing time. The user perception metric (UPM) may, for example, be determined as UPM = (Tuser - Tw * N) / Tbatch or UPM = Tuser / Tbatch - N * Tw / Tbatch.

A range interpretation of UPM may give a link between performance measurement results and user perception or expectation.

Referring again to FIG. 1, the method 10 for measuring user perception quality of a processing system comprising a user interface may comprise comparing 17 the user perception metric with a threshold value. The threshold value may be predefined. The UPM may be found above, equal to or below the threshold value.

The threshold value may, for example, equal 1. If the calculated UPM is found to equal the threshold value, e.g. 1, the duration for executing the one or more operations may be what the user may have to wait anyway until a subsequent sequence of operations can be performed.

A UPM below the threshold value 1 may be understood such that the one or more operations cannot be used to improve user perception by faster execution. Tpoll may be generated in a blocking manner that an asynchronous wait can skip but a next sequence of operations may not.

A UPM above the threshold value 1 may mean that skipping a portion of an operation or an operation of a sequence of operations may allow the next operation or sequence of operations to be performed faster and, thereby, user perception may be improved. In an ideal case, a maximum UPM may be determined as UPMmax = (Tuser - N * Tw) / Tmin.

The method may comprise skipping 18 a particular operation in one or more subsequent executions of the one or more operations, when the user perception metric corresponding to the one or more operations is found above the threshold value.

It should be noted that, in another embodiment, depending on the chosen way of calculating UPM, skipping may be performed when finding the UPM below the threshold value.

The decision, whether to skip an operation or not may depend not only on the UPM, but, for example, also on the type of operation. The skipping may, for example, be omitted when the particular operation is a mandatory operation, i.e., only auxiliary operations may be skipped in order to let the execution of a sequence of operations appear to be faster. For example, showing variable view may not be necessary in a batch stepping command mode. Skipping adjacent or auxiliary operations, such as views, may increase the single operation speed and the speed perception by a human user. For this purpose, metrics of potentially "skip-able" operations may give a perspective on user's perception.

A processing system with a UPM well above 1, such as 1.1 or more, may be regarded as having good user perception. A processing system above, but very close to 1 may have some potential for user perception improvement. A processing system with a UPM below 1 may not have a potential for user perception improvement. There may be one or more polling events that block a subsequent operation. The UPM values may be used as an indication for potential improvement. A UPM value above 1 may be improved by skipping operations of a sequence of operations or portions of an operation in subsequent executions, whereas a UPM value below 1 may indicate that user perception may probably be improved by changing the operation with respect to polling event timing to avoid blocking of the operation.

Classical benchmarking or performance measurement maybe based on absolute measurement values being compared against values achieved in previous product versions. There were cases when user requested shorter time for successive operations. The shown method may allow to separate between how fast an operation can be made from its operations direct measurement and how much an operation can skip parts when the user might not need everything. For the mentioned "step over" debugger operations example, a human user may be interested in getting faster to a point and not in seeing the intermediate values of variables at each step. Otherwise, the user may, for example, press a "slower" button or stop pressing a "faster" button.

The presented UPM may provide a measure between what an operation might in different environments, e.g., a speed mode and an investigation mode.

The shown method may create a link between performance measurement values and user expectation and the UPM may, for example, be evaluated for different processing systems to indicate what product areas may be improved from performance perspective.

Referring to FIG. 4, an example of an embodiment of a device 64 for measuring user perception quality of a processing system 66 comprising a user interface 68 is schematically shown. The illustrated device allows implementing the advantages and characteristics of the described method as part of a device for measuring user perception quality of a processing system comprising a user interface. The device 64 for measuring user perception quality of a processing system 66 comprising a user interface 68, may comprise a measuring unit 70 connected to the processing system 66 and a processing unit 72 connected to the measuring unit 70, wherein the device 64 may be arranged to perform a method as described above.

The device 64 may, for example, also comprise a memory or storage unit, e.g. arranged to store predefined values and/or arranged to receive determined UPM values for further evaluation. The measuring unit 70 may be arranged to measure the first and second processing times. The measuring unit 70 may be connected to the processing system 66 to receive, for example, start and end time information corresponding to a current processing of one or more operations and may calculate the first and second processing times.

The processing unit 72 may be arranged to determine the user perception metric based at least on the measured first and second processing time values and the predefined safety period or wait time. The processing unit 72 may be arranged to evaluate determined UPMs and may be connected to the processing system 66 to control processing, e.g., of subsequent sequences of operations, e.g., to signal skipping of certain operations. In another embodiment, the processing unit may comprise a dedicated control unit arranged to perform control functionality and being connected between the processing unit 72 and the processing system 66.

The user interface 68 may, for example, be a user interface of an integrated development environment 74 (IDE) comprised in the processing system 66. Please note, that a comprised item may be software or hardware. A system may, for example, comprise hardware and software items.

The one or more operations may, for example, be executed by the IDE tool, for example by a debugger comprised in the IDE 74.

The processing system 66 may comprise an embedded system. An embedded system may, for example, be a computer system designed for specific control functions within a larger system, e.g. a car. As shown in FIG. 4, the processing unit 72 may not be part of the processing system 66, or the complete device 64 may not be part of the processing system 66. The processing unit 72 may comprise a separate processing device to allow for accurate remote UPM determination, via wired or wireless connection, without or with reduced interdependencies to the processing load of the processing device of the processing system 66 under test. In another embodiment, the processing unit 72 or the complete device 64 may be comprised in the processing system 66, for example, to reduce hardware costs.

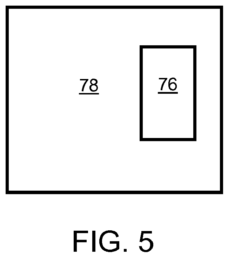

Referring to Fig. 5, an example of an embodiment of a computer program product 76 for a programmable apparatus 78 is schematically shown. The computer program product 76 may comprise code portions for executing steps of a method as described above when run on the programmable apparatus 78, e.g. a computer system.

The invention may also be implemented in a computer program for running on a computer system, at least including code portions for performing steps of a method according to the invention when run on a programmable apparatus, such as a computer system or enabling a programmable apparatus to perform functions of a device or system according to the invention.

A computer program is a list of instructions such as a particular application program and/or an operating system. The computer program may for instance include one or more of: a subroutine, a function, a procedure, an object method, an object implementation, an executable application, an applet, a servlet, a source code, an object code, a shared library/dynamic load library and/or other sequence of instructions designed for execution on a computer system.

The computer program may be stored internally on computer readable storage medium or transmitted to the computer system via a computer readable transmission medium. All or some of the computer program may be provided on transitory or non-transitory computer readable media permanently, removably or remotely coupled to an information processing system. The computer readable media may include, for example and without limitation, any number of the following: magnetic storage media including disk and tape storage media; optical storage media such as compact disk media (e.g., CD-ROM, CD-R, etc.) and digital video disk storage media; nonvolatile memory storage media including semiconductor-based memory units such as FLASH memory, EEPROM, EPROM, ROM; ferromagnetic digital memories; MRAM; volatile storage media including registers, buffers or caches, main memory, RAM, etc.; and data transmission media including computer networks, point-to-point telecommunication equipment, and carrier wave transmission media, just to name a few.

A computer process typically includes an executing (running) program or portion of a program, current program values and state information, and the resources used by the operating system to manage the execution of the process. An operating system (OS) is the software that manages the sharing of the resources of a computer and provides programmers with an interface used to access those resources. An operating system processes system data and user input, and responds by allocating and managing tasks and internal system resources as a service to users and programs of the system.

The computer system may for instance include at least one processing unit, associated memory and a number of input/output (I/O) devices. When executing the computer program, the computer system processes information according to the computer program and produces resultant output information via I/O devices.

The connections as discussed herein may be any type of connection suitable to transfer signals from or to the respective nodes, units or devices, for example via intermediate devices. Accordingly, unless implied or stated otherwise, the connections may for example be direct connections or indirect connections. The connections may be illustrated or described in reference to being a single connection, a plurality of connections, unidirectional connections, or bidirectional connections. However, different embodiments may vary the implementation of the connections. For example, separate unidirectional connections may be used rather than bidirectional connections and vice versa. Also, plurality of connections may be replaced with a single connection that transfers multiple signals serially or in a time multiplexed manner. Likewise, single connections carrying multiple signals may be separated out into various different connections carrying subsets of these signals. Therefore, many options exist for transferring signals.

Those skilled in the art will recognize that the boundaries between logic blocks are merely illustrative and that alternative embodiments may merge logic blocks or circuit elements or impose an alternate decomposition of functionality upon various logic blocks or circuit elements. Thus, it is to be understood that the architectures depicted herein are merely exemplary, and that in fact many other architectures can be implemented which achieve the same functionality. For example, the measuring unit 70 may be separate from or comprised in the processing unit 72.

Any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected," or "operably coupled," to each other to achieve the desired functionality.

Furthermore, those skilled in the art will recognize that boundaries between the above described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments.

Also for example, in one embodiment, the illustrated examples may be implemented as circuitry located on a single integrated circuit or within a same device. For example, the device 64 may be located on the same integrated circuit as the processing system 66. Alternatively, the example may be implemented as any number of separate integrated circuits or separate devices interconnected with each other in a suitable manner. For example, the device 10 may be implemented as a separate integrated circuit or may be implemented using more than one integrated circuit.

Also for example, the examples, or portions thereof, may implemented as soft or code representations of physical circuitry or of logical representations convertible into physical circuitry, such as in a hardware description language of any appropriate type.

Also, the invention is not limited to physical devices or units implemented in non-programmable hardware but can also be applied in programmable devices or units able to perform the desired device functions by operating in accordance with suitable program code, such as mainframes, minicomputers, servers, workstations, personal computers, notepads, personal digital assistants, electronic games, automotive and other embedded systems, cell phones and various other wireless devices, commonly denoted in this application as 'computer systems'.

However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

## Claims

1. A method (10) for determining a user perception metric of a processing system comprising a user interface, the user perception metric being a value indicating a quality of the processing system as perceived by a human user, **characterized in that** said method comprises:
measuring (12) a first processing time for processing, by said processing system, one or more times one or more operations in a batch mode, which is a mode without intervention by the user;
measuring (14) a second processing time for processing, by said processing system, said one or more times said one or more operations and a predefined safety period in a user mode, which is a mode in which one or more user interfaces are provided to the user, wherein said safety period is a maximum possible duration for processing, by said processing system, said one or more operations once; and
determining (16) the user perception metric as a difference of a first value and a second value, said first value being determined depending on a ratio of said second processing time and said first processing time, said second value being determined depending on a ratio of said predefined safety period and said first processing time.

2. The method as claimed in claim 1, wherein said safety period comprises an event polling time.

3. The method as claimed in claim 1 or claim 2, wherein said first value is determined as said ratio of said second processing time and said first processing time.

4. The method as claimed in one of the preceding claims, wherein said second value is determined as said one or more times of said ratio of said predefined safety period and said first processing time.

5. The method as claimed in one of the preceding claims, comprising comparing (17) said user perception metric with a threshold value.

6. The method as claimed in claim 5, wherein said threshold value equals 1.

7. The method as claimed in claim 5 or claim 6, comprising skipping (18) a particular operation in one or more subsequent executions of said one or more operations, when said user perception metric corresponding to said one or more operations is found above said threshold value.

8. The method as claimed in claim 7, wherein said skipping is omitted when said particular operation is a mandatory operation.

9. A device (64) for determining a user perception metric of a processing system (66) comprising a user interface (68), the user perception being a value indicating a quality of the processing system as perceived by a human user, said device comprising
a measuring unit (70) connected to said processing system and
a processing unit (72) connected to said measuring unit, wherein said device is arranged to perform a method as claimed in one of claims 1 to 8.

10. The device as claimed in claim 9, wherein said user interface is a user interface of an integrated development environment (74) comprised in said processing system.

11. The device as claimed in claim 9 or claim 10, wherein said processing system comprises an embedded system.

12. The device as claimed in one of claims 9 to 11, wherein said processing unit is not part of said processing system.

13. A computer program product (76), comprising code portions for executing steps of a method as claimed in one of claims 1 to 8 when run on a programmable apparatus (78).

## Patentansprüche

1. Ein Verfahren (10) zum Bestimmen einer Verwender Wahrnehmungsmetrik von einem Verarbeitungssystem aufweisend ein Verwender Interface, wobei die Verwender Wahrnehmungsmetrik ein Wert ist, der eine Qualität von dem Verarbeitungssystem angibt, wie durch den menschlichen Verwender wahrgenommen, **dadurch gekennzeichnet, dass** das Verfahren aufweist:
Messen (12) einer ersten Verarbeitungszeit zum Verarbeiten ein oder mehrere Male mittels des Verarbeitungssystems einer oder mehrerer Operationen in einem Batch Modus, welcher ein Modus ist ohne Intervention durch den Verwender;
Messen (14) einer zweiten Verarbeitungszeit zum Verarbeiten das eine oder die mehreren Male mittels des Verarbeitungssystem der einen oder mehreren Operationen und einer vordefinierten Sicherheitsperiode in einem Verwender Modus, der einen Modus ist, in welchem eine oder mehrere Verwender Interfaces dem Verwender bereitgestellt werden, wobei die Sicherheitsperiode eine maximal mögliche Dauer zur einmaligen Verarbeitung der einen oder mehreren Operationen mittels des Verarbeitungssystem ist; und
Bestimmen (16) der Verwender Wahrnehmungsmetrik als eine Differenz von einem ersten Wert und einen zweiten Wert, wobei der erste Wert bestimmt wird in Abhängigkeit von einem Verhältnis von der zweiten Verarbeitungszeit und der ersten Verarbeitungszeit, und der zweite Wert bestimmt wird in Abhängigkeit von einem Verhältnis von der vordefinierten Sicherheitsperiode und der ersten Verarbeitungszeit.

2. Das Verfahren gemäß Anspruch 1, wobei die Sicherheitsperiode eine Ereignis Abfragezeit aufweist.

3. Das Verfahren gemäß Anspruch 1 oder Anspruch 2, wobei der erste Wert bestimmt wird als ein Verhältnis von der zweiten Verarbeitungszeit und der ersten Verarbeitungszeit.

4. Das Verfahren gemäß einem der vorhergehenden Ansprüche, wobei der zweite Wert bestimmt wird als das eine oder die mehreren Male von dem Verhältnis von der vorbestimmten Sicherheitsperiode und der ersten Verarbeitungszeit.

5. Das Verfahren gemäß einem der vorhergehenden Ansprüche aufweisend
Vergleichen (17) der Verwender Wahrnehmungsmetrik mit einem Schwellenwert.

6. Das Verfahren gemäß Anspruch 5, wobei der Schwellenwert gleich eins ist.

7. Das Verfahren gemäß einem der Ansprüche 5 oder 6, aufweisend
Überspringen (18) einer bestimmten Operation in einer oder mehreren nachfolgenden Ausführungen von der einen oder mehreren Operationen, wenn gefunden wird, dass die Verwender Wahrnehmungsmetrik, die der einen oder mehreren Operationen entspricht, oberhalb des Schwellenwertes liegt.

8. Das Verfahren gemäß Anspruch 7, wobei das Überspringen ausgesetzt wird, wenn eine bestimmte Operation eine zwingende Operation ist.

9. Eine Vorrichtung (64) zum Bestimmen einer Verwender Wahrnehmungsmetrik von einem Verarbeitungssystem (66) aufweisend ein Verwender Interface (68), wobei die Verwender Wahrnehmungsmetrik ein Wert ist, der eine Qualität von dem Verarbeitungssystem anzeigt, wie durch den menschlichen Verwender wahrgenommen, wobei die Vorrichtung aufweist
eine Messeinheit (70), die verbunden ist mit dem Verarbeitungssystem und
eine Verarbeitungseinheit (72), die verbunden ist mit der Messeinheit, wobei die Vorrichtung ausgebildet ist zum Durchführung eines Verfahrens gemäß einem der Ansprüche 1 bis 8.

10. Die Vorrichtung gemäß Anspruch 9, wobei das Verwender Interface ein Verwender Interface von einer integrierten Entwicklungsumgebung (74) ist, die von dem Verarbeitungssystem umfasst ist.

11. Die Vorrichtung gemäß Anspruch 9 oder Anspruch 10, wobei das Verarbeitungssystem ein eingebettetes System umfasst.

12. Die Vorrichtung gemäß einem der Ansprüche 9 bis 11, wobei die Verarbeitungseinheit nicht Teil des Verarbeitungssystems ist.

13. Ein Computerprogramm Produkt (76), das Code Teile aufweist zur Durchführung von Schritten von einem Verfahren gemäß einem der Ansprüche 1 bis 8, wenn auf einem programmierbaren Apparat (78) ausgeführt.

## Revendications

1. Procédé (10) de détermination d'une métrique de perception utilisateur d'un système de traitement comprenant une interface utilisateur, la métrique de perception utilisateur étant une valeur indiquant une qualité du système de traitement perçue par un utilisateur humain, ledit procédé étant **caractérisé en ce qu'**il comprend :
la mesure (12) d'un premier temps de traitement pour le traitement, par ledit système de traitement, une ou plusieurs fois d'une ou de plusieurs opérations dans un mode de traitement par lot, lequel est un mode sans intervention de l'utilisateur ;
la mesure (14) d'un deuxième temps de traitement pour le traitement, par ledit système de traitement, lesdites une ou plusieurs fois desdites une ou plusieurs opérations et d'une période de sécurité prédéfinie dans un mode utilisateur, lequel est un mode dans lequel une ou plusieurs interfaces utilisateurs sont fournies à l'utilisateur, ladite période de sécurité étant une durée maximale possible pour le traitement, par ledit système de traitement, desdites une ou plusieurs opérations une seule fois ; et
la détermination (16) de la métrique de perception utilisateur sous forme d'une différence entre une première valeur et une deuxième valeur, ladite première valeur étant déterminée en fonction d'un rapport entre ledit deuxième temps de traitement et ledit premier temps de traitement, ladite deuxième valeur étant déterminée en fonction d'un rapport entre ladite période de sécurité prédéfinie et ledit premier temps de traitement.

2. Procédé selon la revendication 1, dans lequel ladite période de sécurité comprend un temps de scrutation d'événements.

3. Procédé selon la revendication 1 ou la revendication 2, dans lequel ladite première valeur est déterminée sous forme dudit rapport entre ledit deuxième temps de traitement et ledit premier temps de traitement.

4. Procédé selon l'une des revendications précédentes, dans lequel ladite deuxième valeur est déterminée sous forme desdites une ou plusieurs fois dudit rapport entre ladite période de sécurité prédéfinie et ledit premier temps de traitement.

5. Procédé selon l'une des revendications précédentes, comprenant la comparaison (17) de ladite métrique de perception utilisateur à une valeur-seuil.

6. Procédé selon la revendication 5, dans lequel ladite valeur-seuil vaut 1.

7. Procédé selon la revendication 5 ou la revendication 6, comprenant le saut (18) d'une opération particulière dans une ou plusieurs exécutions suivantes desdites une ou plusieurs opérations, lorsque ladite métrique de perception utilisateur correspondant auxdites une ou plusieurs opérations se situe au-dessus de ladite valeur-seuil.

8. Procédé selon la revendication 7, dans lequel ledit saut est omis lorsque ladite opération particulière est une opération obligatoire.

9. Dispositif (64) de détermination d'une métrique de perception utilisateur d'un système de traitement (66) comprenant une interface utilisateur (68), la métrique de perception utilisateur étant une valeur indiquant une qualité du système de traitement perçue par un utilisateur humain, ledit dispositif comprenant
une unité de mesure (70) reliée audit système de traitement, et
une unité de traitement (72) reliée à ladite unité de mesure, ledit dispositif étant conçu pour réaliser un procédé selon l'une des revendications 1 à 8.

10. Dispositif selon la revendication 9, dans lequel ladite interface utilisateur est une interface utilisateur d'un environnement de développement intégré (74) compris dans ledit système de traitement.

11. Dispositif selon la revendication 9 ou la revendication 10, dans lequel ledit système de traitement comprend un système embarqué.

12. Dispositif selon l'une des revendications 9 à 11, dans lequel ladite unité de traitement ne fait pas partie dudit système de traitement.

13. Produit-programme d'ordinateur (76), comprenant des parties de code permettant la réalisation d'étapes d'un procédé selon l'une des revendications 1 à 8 lors de leur exécution sur un appareil programmable (78).
